# EUROPÄISCHE PATENTSCHRIFT

(11) **EP 0 937 871 B1**
(45) Veröffentlichungstag und Bekanntmachung des Hinweises auf die Patenterteilung: **11.04.2001**
(21) Anmeldenummer: 99101591.8
(22) Anmeldetag: 29.01.1999
(51) Int. Cl.: F01N 3/20

(54) **Verfahren und Vorrichtung zum Betanken von Reduktionsmittel eines Fahrzeuges mit reduktionsmittelbetriebener Abgasreinigungsanlage**
Method and apparatus for the fuelling of a reducing agent of a vehicle including an exhaust gas cleaning device with reducing agent addition
Méthode et dispositif pour le ravitaillement d'agent réducteur d'un véhicule avec dispositif d'épuration de gaz d'échappement avec addition d'agent réducteur

(30) Priorität: 20.02.1998 DE 19807216
(43) Veröffentlichungstag der Anmeldung: 25.08.1999
(73) Patentinhaber: SIEMENS AKTIENGESELLSCHAFT, 80333 München (DE)
(72) Erfinder: Pielmeier, Gordon, 93152 Haugenried (DE)

(56) Entgegenhaltungen:
- US-A- 5 651 247

## Beschreibung

Die Erfindung betrifft ein Verfahren und eine Vorrichtung zum Betanken eines Fahrzeuges mit reduktionsmittelbetriebener Abgasreinigungsanlage gemäß den Oberbegriffen der unabhängigen Patentansprüche 1 und 9.

Die Verminderung der Stickoxidemission einer mit Luftüberschuß arbeitenden Brennkraftmaschine, insbesondere einer Dieselbrennkraftmaschine kann mit einem ammoniakhaltigen Reduktionsmittel an einem selektiv arbeitenden Katalysator (SCR-Katalysator) zu N₂ und H₂O erfolgen (SCR Selective Catalytic Reduction). Als Reduktionsmittel werden entweder gasförmiges Ammoniak (NH₃), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR-Katalysator die Stickoxide reduziert.

Ein solches Dosiersystem weist als wesentliche Komponenten einen Reduktionsmittelbehälter, eine Pumpe, einen Druckregler, einen Drucksensor und ein Dosierventil auf. Die Pumpe fördert das in dem Reduktionsmittelbehälter bevorratete Reduktionsmittel zu dem Dosierventil, mittels dessen das Reduktionsmittel in den Abgasstrom stromaufwärts des Hydrolysekatalysators eingespritzt wird. Das Dosierventil wird über Signale einer Steuerungseinrichtung derart angesteuert, dass abhängig von Betriebsparametern der Brennkraftmaschine eine bestimmte, aktuell nötige Menge an Reduktionsmittel zugeführt wird (DE 197 43 337 C1).

Bei einer solchen reduktionsmittelbetriebenen Abgasreinigungsanlage, die mit einer abgasausstoßenden Brennkraftmaschine, insbesondere eines Dieselmotors eines Kraftfahrzeuges zusammenarbeitet, ist die Bevorratung des Reduktionsmittels in einem Behälter oder in einem Tank erforderlich. Ein festes Reduktionsmittel, auch als Denoxierungsmittel bezeichnet, wie z.B. Harnstoff, ist dabei u. a. aus Gründen einer guten Dosierbarkeit in einer Flüssigkeit, z. B. in Wasser gelöst. Derartige Reduktionsmittellösungen kristallisieren und erstarren bei Temperaturen, die im Fahrzeug und bei Außenanbringung des Reduktionsmitteltanks unterschritten werden können. Beispielsweise erstarrt eine 32,5%-ige Harnstoff-Wasserlösung bei -11°C. Eine eingefrorene oder erstarrte Lösung kann nicht mehr gefördert und dosiert werden und das Abgas wird in einem solchen Fall nicht gereinigt. Wird als Denoxierungsmittel eine wässerige Harnstofflösung verwendet, so hinterläßt diese beim Austrocknen salzartige Flecken, so daß ein mögliches Verschütten der Harnstofflösung beim Nachfüllen des Reduktionsmittelbehälters vermieden werden muß. Deshalb scheidet das Betanken, bzw. das Nachfüllen des Reduktionsmittelbehälters im Innenraum aus. Ein Unterbringen des Reduktionsmittelbehälters, z.B. im Kofferraum des Fahrzeuges, in dem bei manchen Fahrzeugtypen der Scheibenwaschbehälter für die Heckscheibenwaschanlage eingebaut ist, kann somit nicht in Erwägung gezogen werden.

Auch der Einbau des Reduktionsmitteltanks in den Motorraum kann nicht empfohlen werden, da die Harnstofflösung zu einem bestimmten Anteil aus Ammoniak besteht. Das Ammoniak gast schon bei einer Temperatur ab ca 60°C aus. Ein weiteres Problem ist Ammoniakwasser, das für die Winterfestigkeit dem Redukionsmittel zugemischt wird. Ammoniakwasser hat eine ziemlich hohe Konzentration und ist dadurch ätzend, so daß sichergestellt werden muß, daß der Benutzer des Fahrzeugs möglichst nicht mit dem Reduktionsmittel in Berührung kommt. Dies ist insbesondere dann der Fall, wenn der Vorrat an Reduktionsmittel unter einem bestimmten Schwellenwert abfällt und der Benutzer des Kraftfahrzeuges den Reduktionsmitteltank auffüllen muß.

Aufgabe der Erfindung ist es deshalb, ein Verfahren und eine Vorrichtung zum sicheren Betanken des Reduktionsmittelbehälters anzugeben.

Diese Aufgabe wird durch die Merkmale der unabhängigen Patentansprüche 1 und 9 gelöst. Vorteilhafte Ausgestaltungen ergeben sich aus den Unteransprüchen.

Der Erfindung liegt der Gedanke zugrunde, die zum Dosieren des Reduktionsmittels ohnehin vorhandene, den Systemdruck bereitstellende Förderpumpe auch zum Betanken des Reduktionsmittelbehälters zu benutzen. Mittels eines im Leitungszweig zwischen Behälter und Pumpe angeordneten Umschaltventils kann der Reduktionsmittelkreislauf derart umgeschaltet werden, daß sowohl eine ordnungsgemäße Befüllung des Behälters, als auch bei Bedarf eine Zumessung von Reduktionsmittel in den Abgastrakt der Brennkraftmaschine erfolgen kann.

Mittels eines elektrisch ansteuerbaren Umschaltventils, an dessen einen Abzweig ein Tankschlauch angeschlossen ist, der zum Betanken mit einer Zapfsäule einer Tankkstelleneinrichtung verbunden wird, ist es auf einfache Weise möglich, den Behälter mit Reduktionsmittel zu befüllen, ohne daß der Fahrer des mit einem solchen System ausgerüsteten Fahrzeuges in Berührung mit dem Reduktionsmittel gelangt.

Durch das mittels elektrischer Signale einer Steuerungseinrichtung für das NOx-System automatisch gesteuerte Abpumpen des Reduktionsmittels sind keinerlei zur Umgebung offene Behälter vonnöten und damit keine Gefahr des Verschüttens von Reduktionsmittel vorhanden.

Durch den Anschluß eines mit einem Schnellverschluß versehenen Tankschlauches kann der Reduktionsmittelbehälter an einer bezüglich Temperatur und Einbauplatz optimalen Stelle im Kraftfahrzeug angeordnet sein, da kein zugänglicher Einfüllstutzen notwendig ist. Dies schließt auch ein Verwechseln mit anderen Behältern, insbesondere Behälter für Scheibenwaschanlagen und daraus folgender Fehlbefüllung mit nicht geeigneten Flüssigkeiten aus.

Durch Überwachen und Steuern des Betankungsvorganges mit Hilfe der für die Dosierung des Reduktionsmittels vorhandenen Steuerungseinrichtung sind Fehlbedienungen weitestgehend ausgeschlossen. Ein Überfüllen des Reduktionsmittelbehälters wird verhindert, indem beim Betanken die Signale einer ohnehin zur Messung des Füllstandes vorhandene, elektronische Füllstandsmessung ausgewertet werden und der Betankungsvorgang automatisch abgebrochen wird, wenn ein maximaler Füllstand erreicht ist.

Außerdem kann über die Steuerungseinrichtung durch Speichern des Tankvorganges der ungefähre Verbrauch des Reduktionsmittels hochgerechnet und somit plausibel bestimmt werden, ob das System fehlerfrei funktioniert.

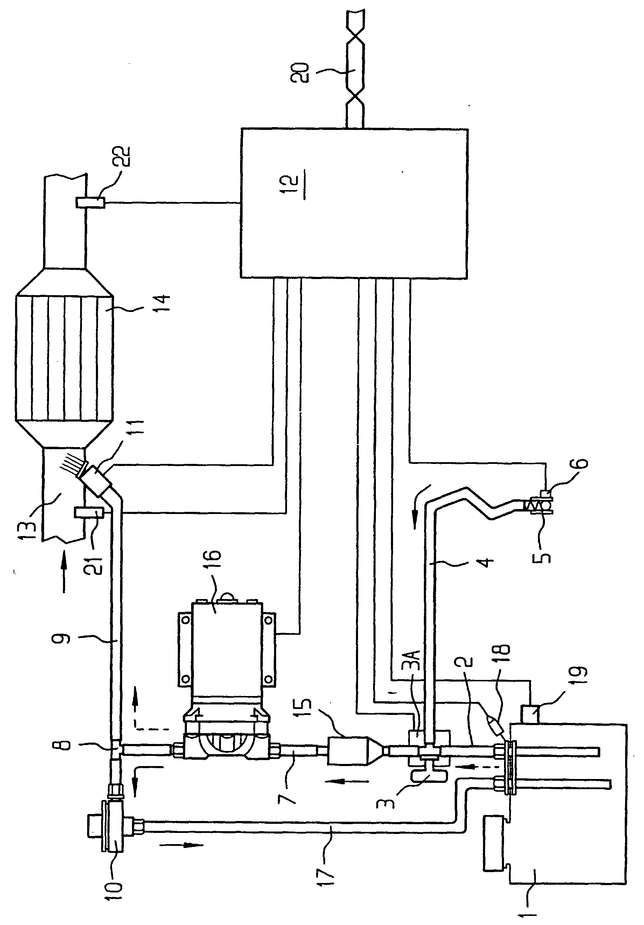

Ein Ausführungsbeispiel der Erfindung ist im folgenden unter Bezugnahme auf die einzige Figur näher erläutert.

Mit dem Bezugszeichen 1 ist ein Reduktionsmittelbehälter bezeichnet, der an einer beliebigen, auch an einer nicht unmittelbar zugänglichen Stelle im Kraftfahrzeug eingebaut ist. Vom Reduktionsmittelbehälter 1 führt eine Verbindungsleitung 2 zu einem Umschalter 3, der ein Umschaltventil 3A (Zwei-Wege Ventil) umfasst, mit dessen Hilfe der Reduktionsmittelkreislauf in einer später beschriebenen Art und Weise umgeschaltet werden kann. An einem ersten Abzweig des Umschaltventils 3A geht ein zum Zuführen des Reduktionsmittels dienender Tankschlauch 4 ab. Er weist an seinem Ende eine Schnellkupplung 5 auf, die im Ruhezustand beispielsweise mittels eines durch Federkraft beaufschlagten Ventils dicht abgeschlossen ist. Beim Betankungsvorgang wird durch die Schnellkupplung 5 eine hermetisch dichte Verbindung mit einer Betankungseinrichtung, z.B. einer Zapfsäule einer Tankstelleneinrichtung hergestellt. Vorzugsweise ist diese Schnellkupplung 5 mit einem elektrischen Kontakt 6 ausgestattet, der beim Betankungsvorgang automatisch betätigt wird.

Vom weiteren Anschluß des Umschaltventils 3A führt eine Verbindungsleitung 7 zu einem, in Form eines T-Stückes ausgebildeten Abzweiges 8 einer Leitung 9, die von einem Druckregler 10 zu einer Dosiereinrichtung 11 für das Reduktionsmittel führt. Die Dosiereinrichtung 11 ist dabei als Einspritzventil realisiert, das mittels Ansteuersignale von einer Steuerungseinrichtung 12 Reduktionsmittel, beispielsweise wässerige Harnstofflösung in den Abgastrakt 13 stromaufwärts eines Hydrolyse/SCR-Katalysators 14 einspritzt.

In die Verbindungsleitung 7 ist zwischen dem Umschaltventil 3A und dem Abzweig 8 in dieser Reihenfolge ein Filter 15 und eine elektrisch ansteuerbare Förderpumpe 16 eingeschaltet. Hierzu ist die Förderpumpe 16 mittels einer nicht näher bezeichneten Ansteuerleitung mit der Steuerungseinrichtung 12 verbunden. Vom Druckregler 10 führt eine Rückführleitung 17 zurück zum Reduktionsmittelbehälter 1.

Zum Erfassen des Füllstandes des Reduktionsmittels im Behälter ist ein Sensor 18 vorgesehen. Die Temperatur des Reduktionsmittels wird mit Hilfe eines Temperatursensors 19 ermittelt. Die Ausgangssignale der beiden Sensoren 18, 19 werden an die Steuerungseinrichtung 12 zur Aufbereitung und Verarbeitung weitergeleitet.

Die Steuerungseinrichtung 12 enthält u.a. folgende Funktionsblöcke:
- eine serielle Schnittstelle 20 (z.B. CAN-BUS) zu einem Steuergerät der Brennkraftmaschine und/oder zu weiteren Steuergeräten (nicht dargestellt). Über diese Schnittstelle werden z.B. Drehzahl, Regelweg und Ladelufttemperatur übergeben,
- Aktoransteuerungen sowohl für die Förderpumpe 16, das Einspritzventil 11, als auch für eine Heizungseinrichtung im Behälter zum Beheizen des Reduktionsmittels mit der Möglichkeit zur Prüfung der Aktoren, beispielsweise durch Messung von Strömen oder Reaktionszeiten,
- notwendige Spannungsversorgungen und Signalaufbereitungsschaltungen für die Sensoren (Füllstand, Temperatur),
- Signalauswertungsschaltungen gemäß sensorspezifischen Kenndaten,
- Einrichtungen zur Plausibilitätsprüfungen der Sensorsignale (Fehlererkennung, Diagnose),
- Selbstkalibrierfunktionen und Diagnosefunktionen

Außerdem werden weitere, zum Betrieb des NOx-Reduktionssystems nötigen Signale, wie z.B. ein Temperatursignal eines Sensors 21 stromaufwärts des SCR-Katalyators und das Signal eines NOx-Sensors 22 stromabwärts des SCR-Katalysators zur Durchführung von Regenerationsphasen desselben ausgewertet.

Im folgenden wird die Funktion der beschriebenen Vorrichtung erläutert.

Um den Reduktionsmittelbehälter 1 zu betanken, wird der Tankschlauch 4 mit seiner Schnellkupplung 5 an ein entsprechendes Gegenstück an einer Zapfsäule einer Tankstelleneinrichtung angeschlossen. Durch den Kopplungsvorgang wird ein in der Schnellkupplung 5 enthaltener Verschluß geöffnet, so daß eine Fließverbindung für das Reduktionsmittel hergestellt wird. Anschließend wird das Umschaltventil 3A mit Hilfe des manuell vom Fahrer des Kraftfahrzeuges bedienbaren Umschalters 3 in eine sogenannte Tankstellung gebracht. Durch das Umschalten wird der Reduktionsmittelkreislauf umgestellt und gleichzeitig wird über eine nicht näher bezeichnete Signalleitung zwischen dem Umschalter 3 und der Steuerungseinrichtung 12 an diese ein Signal übertragen, das als Information "Betanken einleiten" interpretiert wird. Daraufhin wird die Förderpumpe 16 angesteuert und Reduktionsmittel wird von der Zapfsäule über den Tankschlauch 4, das Umschaltventil 3A, das Filter 15, der Verbindungsleitung 7 und der Förderpumpe 16 zum Abzweig 8 und von dort über den Druckregler 10 und der Rückführleitung 17 zum Reduktionsmitelbehälter 1 gefördert. Der Fluß des Reduktionsmittels ist in der Figur mit in durchgezogenen Linien gezeichneten Pfeilsymbolen gekennzeichnet.

Anstelle der oben erwähnten, manuellen Umschaltung des Reduktionsmittelkreislaufes mittels des Umschalters 3 kann dies auch automatisch beim Ankoppeln des Tankschlauches 4 an der Zapfsäule erfolgen. Hierzu ist an der Schnellkupplung 5 ein elektrischer Kontakt 6 vorgesehen, der beispielsweise beim Anschluß des Tankschlauches 4 geschlossen wird, wodurch ein Signal der Steuerungseinrichtung 12 zugeführt wird. Dieses Signal löst dann durch Ansteuern des Umschaltventils 3A das Umschalten des Reduktionsmittelkreislaufes aus.

Während des Betankungsvorganges wird mit Hilfe des Sensors 18 laufend der Füllstand im Reduktionsmittelbehälter 1 überwacht. Wird ein vorgegebener maximaler Füllstand erreicht, so wird die Förderpumpe 16 über entsprechende Signale der Steuerungseinrichtung 12 wieder abgeschaltet. Der Betankungsvorgang ist beendet.

Nun wird die Verbindung zwischen dem Kraftfahrzeug und der Zapfsäule wieder gelöst. Durch das Ausstecken des Tankschlauches 4 von der Zapfsäule dichtet das Schließventil in der Schnellkupplung 5 automatisch den Tankschlauch ab. Dadurch wird ein Nachtropfen und Verschütten selbst geringster Mengen an Reduktionsmittel sicher verhindert.

Anschließend wird vom Benutzer des Fahrzeuges der Umschalter 3 in eine sogenannnte Betriebsstellung "Dosierung" gebracht, bei der das Umschaltventil 3A eine Fließverbindung vom Reduktionsmittelbehälter 1 zur Verbindungsleitung 7 herstellt.

Auch hier ist es analog wie beim Umschalten auf Tankstellung möglich, die Umschaltung vom Betriebszustand "Betanken" auf den Betriebszustand "Dosierung" zu automatisieren. Hierzu kann wieder der elektrische Kontakt 6 an der Schnellkupplung herangezogen werden. Wird der Tankschlauch 4 von der Zapfsäule abgezogen, so unterbricht der Kontakt 6 eine Signalleitung zu der Steuerungseinrichtung 12. Daraufhin erfolgt eine elektrische Ansteuerung des Umschaltventils 3A in der Weise, daß eine Fließverbindung zwischen Reduktionsmittelbehälter 1 und Förderpumpe 16 hergestellt wird.

Liegt nun ein Betriebszustand der Brennkraftmaschine vor, der eine Dosierung von Reduktionsmittel ermöglicht und erforderlich macht, so wird die Förderpumpe 16 angesteuert. Es wird Reduktionsmittel vom Behälter 1 über die Verbindungsleitung 2, das Umschaltventil 3A, das Filter 15, die Verbindungsleitung 7, die Förderpumpe 16, den Abzweig 8 und der Leitung 9 zu der Dosiereinrichtung 11 gepumpt und dort in den Abgastrakt 13 eingespritzt. Der Fluß des Reduktionsmittels ist in der Figur mit strichlierten Linien gezeichneten Pfeilsymbolen eingezeichnet. Zuviel gefördertes Reduktionsmittel fließt über den Druckregler 10 und die Rückführleitung 17 zurück in den Behälter 1.

Das beschriebene Verfahren und die Vorrichtung eignen sich für alle Denoxierungsmittel, mit denen der Fahrer des Fahrzeuges beim Betanken dieser Mittel aus Sicherheits- oder aus anderen Gründen nicht in Berührung kommen soll.

## Patentansprüche

1. Verfahren zum Betanken von Reduktionsmittel eines mit einer reduktionsmittelbetriebenen Abgasreinigungsanlage ausgerüsteten Kraftfahrzeuges, wobei
- zur Reduzierung von Stickoxiden im Abgas Reduktionsmittel aus einem Reduktionsmittelbehälter (1) mittels einer Pumpeinrichtung (16) innerhalb eines Reduktionsmittelkreislaufes zu einer Dosiereinrichtung (11) gefördert wird, und
- eine Steuerungseinrichtung (12) mit zugeordneten Sensoren und Aktoren diese Reduktionsmitteldosierung und die Pumpeinrichtung (16) steuert,
**dadurch gekennzeichnet, daß**
zum Betanken des Reduktionsmittelbehälters (1) der Reduktionsmittelkreislauf umgeschaltet wird und anschließend mittels der Pumpeinrichtung (16) Reduktionsmittel von einem außerhalb des Kraftfahrzeuges befindlichen Vorratsspeicher in den Reduktionsmittelbehälter (1) gepumpt wird.

2. Verfahren nach Anspruch 1, dadurch gekennzeichnet, daß die Umschaltung des Reduktionsmittelkreislaufes mittels eines in der Verbindungsleitung (2,7) zwischen Behälter (1) und Pumpeinrichtung (16) liegenden Umschaltventils (3A) erfolgt.

3. Verfahren nach Anspruch 2, dadurch gekennzeichnet, daß die Betätigung des Umschaltventils (3A) manuell eingeleitet wird.

4. Verfahren nach Anspruch 2, dadurch gekennzeichnet, daß die Betätigung des Umschaltventils (3A) über Signale der Steuerungseinrichtung (12) erfolgt.

5. Verfahren nach einem der vorhergehenden Ansprüche, dadurch gekennzeichnet, daß die Pumpeinrichtung (16) mit Hilfe des Umschaltventils (3A) wahlweise mit dem Reduktionsmittelbehälter (1) oder mit einem Tankschlauch (4) verbunden wird, der zum Betanken mit dem Vorratsspeicher gekoppelt wird.

6. Verfahren nach Anspruch 5, dadurch gekennzeichnet, daß beim Ankoppeln des Tankschlauches (4) sowohl eine hermetisch dichte Fließverbindung für das Reduktionsmittel hergestellt, als auch ein elektrischer Kontakt (6) geschlossen wird.

7. Verfahren nach Anspruch 6, dadurch gekennzeichnet, daß durch Auswerten des Signals am Kontakt (6) das Umschaltventil (3A) gesteuert wird.

8. Verfahren nach Anspruch 1, dadurch gekennzeichnet, daß während des Betankungsvorganges der Füllstand des Reduktionsmittelbehälters (1) überwacht und bei Überschreiten eines maximalen Füllstandes die Betankung abgebrochen wird.

9. Vorrichtung zum Betanken von Reduktionsmittel eines mit einer reduktionsmittelbetriebenen Abgasreinigungsanlage ausgerüsteten Kraftfahrzeuges, mit
- einer Pumpeinrichtung (16), die Reduktionsmittel zur Reduzierung von Stickoxiden im Abgas aus einem Reduktionsmittelbehälter (1) zu einer Dosiereinrichtung (11) fördert,
- einer Steuerungseinrichtung (12) mit zugeordneten Sensoren und Aktoren, welche die Reduktionsmitteldosierung und die Pumpeinrichtung (16) steuert,
**dadurch gekennzeichnet, daß**
in einer Verbindungsleitung (2,7) zwischen Reduktionsmittelbehälter (1) und Pumpeinrichtung (16) ein Umschaltventil (3A) eingefügt ist, an dessen einen Eingang der Reduktionsmittelbehälter (1) und an dessen weiteren Eingang ein Tankschlauch (4) angeschlossen ist, der zum Betanken des Behälters (1) mit einem Vorratspeicher verbindbar ist.

10. Vorrichtung nach Anspruch 9, dadurch gekennzeichnet daß der Tankschlauch (4) an seinem freien Ende eine Schnellkupplung und einen elektrischen Kontakt (6) aufweist, der mit entsprechenden Aufnahmeteilen am Vorratsspeicher zusammenwirken.

11. Vorrichtung nach Anspruch 9, dadurch gekennzeichnet daß das Umschaltventil (3A) einen manuell betätigbaren Umschalter (3) aufweist.

12. Vorrichtung nach Anspruch 9, dadurch gekennzeichnet daß das Umschaltventil (3A) als elektrische ansteuerbares Ventil ausgestaltet ist, das zumindest in Abhängigkeit von den Signalen am Kontakt (6) betätigt wird.

13. Vorrichtung nach Anspruch 9, dadurch gekennzeichnet daß im Reduktionsmittelbehälter (1) ein Füllstandssensor (18) angeordnet ist, dessen Ausgangssignal die Betriebsdauer der Pumpeinrichtung (16) während des Betankens steuert.

## Claims

1. A method for filling a fluid reservoir in motor vehicles that are equipped with an exhaust emission control system employing a reducing agent, where
- in order to reduce the amount of nitrogen oxides contained in the exhaust gas, a reducing agent is fed with the aid of a pump unit (16) from a reducing agent reservoir (1) to a metering device (11) within a reducing agent circulation system, and
- a control unit (12) is used to control the pump unit (16) and the metering-out of the reducing agent with the aid of associated sensors and actuators,
**characterised in that**
for filling the reducing agent reservoir (1), the circulation of the reducing agent is changed over and the reducing agent is then pumped from a storage facility situated outside the vehicle with the aid of the pump unit (16) into the reducing agent reservoir (1).

2. Method in accordance with Claim 1, characterised in that changing-over of the reducing agent circulation is performed by means of a changeover valve (3A) located in the connecting line (2,7) between reservoir (1) and pump unit (16).

3. Method in accordance with Claim 2, characterised in that actuation of the changeover valve (3A) is initiated manually.

4. Method in accordance with Claim 2, characterised in that actuation of the changeover valve (3A) is performed via signals from the control unit (12).

5. Method in accordance with one of the preceding claims, characterised in that the pump unit (16) can be connected with the aid of the changeover valve (3A) as desired to either the reducing agent reservoir (1) or to a filling hose (4), the latter being coupled to the storage facility for the purpose of filling the reservoir.

6. Method in accordance with Claim 5, characterised in that when the filling hose (4) is coupled to the storage facility, both a hermetically sealed through-connection is made for the reducing agent to flow and an electrical contact (6) is closed.

7. Method in accordance with Claim 6, characterised in that the changeover valve (3A) is controlled by evaluating the signal at contact (6).

8. Method in accordance with Claim 1, characterised in that during the filling process, the fill level of the reducing agent reservoir (1) is monitored and the filling process is stopped when a maximum fill level is exceeded.

9. Arrangement for filling a fluid reservoir in motor vehicles that are equipped with an exhaust emission control system employing a reducing agent, comprising
- a pump unit (16), which feeds a reducing agent for reducing nitrogen oxides in the exhaust gas from a reducing agent reservoir (1) to a metering device (11), and
- a control unit (12) with associated sensors and actuators, which controls the metering-out of the reducing agent and the pump unit (16)
**characterised in that**
a changeover valve (3A) is inserted in a connecting line (2,7) between reducing agent reservoir (1) and pump unit (16), one input of the changeover valve being connected to the reducing agent reservoir (1) and the other input to a filling hose (4) which can be connected to a storage facility for the purpose of filling the reservoir (1).

10. Arrangement in accordance with Claim 9, characterised in that the filling hose (4) has at its free end a quick-action coupling mechanism and an electrical contact (6), these interacting with corresponding parts on the storage facility.

11. Arrangement in accordance with Claim 9, characterised in that the changeover valve (3A) has a manually operable changeover switch.

12. Arrangement in accordance with Claim 9, characterised in that the changeover valve (3A) is implemented as an electrically controllable valve which is operated in dependence on at least the signals present at contact (6).

13. Arrangement in accordance with Claim 9, characterised in that a fill level sensor (18) is arranged in the reducing agent reservoir (1), the output signal of which controls the operating time of the pump unit (16) during the filling process.

## Revendications

1. Procédé pour faire le plein en agent réducteur d'un véhicule automobile équipé d'un appareil d'épuration de gaz d'échappement fonctionnant avec un agent réducteur, selon lequel
- pour réduire les oxydes d'azote dans les gaz d'échappement, un agent réducteur est mis en circulation d'un réservoir d'agent réducteur (1) vers un dispositif d'apport dosé (11) au moyen d'un dispositif de pompage (16) situé dans un circuit d'agent réducteur et
- un dispositif de commande (12) comportant des capteurs et actionneurs associés commande cet apport dosé d'agent réducteur et le dispositif de pompage (16),
caractérisé en ce que, pour faire le plein du réservoir d'agent réducteur (1), il est procédé à une commutation sur le circuit d'agent réducteur, puis, au moyen du dispositif de pompage (16), de l'agent réducteur est pompé jusque dans le réservoir d'agent réducteur (1) à partir d'un accumulateur de réserve situé à l'extérieur du véhicule automobile.

2. Procédé suivant la revendication 1, caractérisé en ce que la commutation du circuit d'agent réducteur s'effectue au moyen d'une valve de commutation (3A) disposée dans la conduite de liaison (2, 7) située entre le réservoir (1) et le dispositif de pompage (16).

3. Procédé suivant la revendication 2, caractérisé en ce que l'actionnement de la valve de commutation (3A) est provoqué manuellement.

4. Procédé suivant la revendication 2, caractérisé en ce que l'actionnement de la valve de commutation (3A) a lieu au moyen de signaux du dispositif de commande (12).

5. Procédé suivant l'une quelconque des revendications 1 à 4, caractérisé en ce qu'au moyen de la valve de commutation (3A), le dispositif de pompage (16) est relié, au choix, au réservoir d'agent réducteur (1) ou à un tuyau souple de réservoir (4) qui est accouplé à l'accumulateur de réserve pour faire le plein.

6. Procédé suivant la revendication 5, caractérisé en ce que, lors de l'accouplement du tuyau souple de réservoir (4), une liaison d'écoulement hermétiquement étanche à l'écoulement de l'agent réducteur est réalisée et un contact électrique (6) est également fermé.

7. Procédé suivant la revendication 6, caractérisé en ce que la valve de commutation (3A) est commandée au moyen d'une analyse du signal présent à l'endroit du contact (6).

8. Procédé suivant la revendication 1, caractérisé en ce que, pendant l'opération de remplissage, le niveau du réservoir d'agent réducteur (1) est surveillé et le remplissage est interrompu lorsqu'un niveau maximal est franchi.

9. Dispositif permettant de faire le plein en agent réducteur d'un véhicule automobile équipé d'un appareil d'épuration de gaz d'échappement fonctionnant avec un agent réducteur, comprenant
- un dispositif de pompe (16) qui, en vue de la réduction des oxydes d'azote dans les gaz d'échappement, fait circuler un agent réducteur d'un réservoir d'agent réducteur (1) vers un dispositif d'apport dosé (11), et
- un dispositif de commande (12) comportant des capteurs et actionneurs associés qui commande l'apport dosé d'agent réducteur et le dispositif de pompage (16),
caractérisé en ce qu'il est prévu, interposé dans une conduite de liaison (2, 7) située entre le réservoir d'agent réducteur (1) et le dispositif de pompage (16), une valve de commutation (3A) à une entrée de laquelle est raccordé le réservoir d'agent réducteur (1) et à l'autre entrée, un tuyau souple de réservoir qui, pour faire le plein du réservoir (1), peut être relié à un accumulateur de réserve.

10. Dispositif suivant la revendication 9, caractérisé en ce qu'à son extrémité libre, le tuyau souple de réservoir (4) comporte un accouplement rapide et un contact électrique (6) qui coopèrent avec des parties réceptrices correspondantes situées sur l'accumulateur de réserve.

11. Dispositif suivant la revendication 9, caractérisé en ce que la valve de commutation (3A) comporte un organe de commutation (3) pouvant être actionné manuellement.

12. Dispositif suivant la revendication 9, caractérisé en ce que la valve de commutation (3A) est réalisée sous forme d'une valve à commande électrique qui est actionnée au moins en fonction des signaux se présentant à l'endroit du contact (6).

13. Dispositif suivant la revendication 9, caractérisé en ce qu'il est prévu, disposé dans le réservoir d'agent réducteur (1), un détecteur de niveau (18) dont le signal de sortie commande la durée de fonctionnement du dispositif de pompage (16) pendant le remplissage.
